Europäisches Patentamt

European Patent Office

Office européen des brevets

(19)

(11) Veröffentlichungsnummer : **0 166 882**
**B1**

(12) # EUROPÄISCHE PATENTSCHRIFT

(45) Veröffentlichungstag der Patentschrift :
15.06.88

(21) Anmeldenummer : 85104742.3

(22) Anmeldetag : 19.04.85

(51) Int. Cl.⁴ : **B 60 G 11/26, B 60 G 17/04**

(54) **Höhenverstellbare Luftfederung.**

(30) Priorität : 08.05.84 DE 3416861

(43) Veröffentlichungstag der Anmeldung :
08.01.86 Patentblatt 86/02

(45) Bekanntmachung des Hinweises auf die Patenterteilung : 15.06.88 Patentblatt 88/24

(84) Benannte Vertragsstaaten :
DE FR GB IT NL

(56) Entgegenhaltungen :
DE-A- 1 964 365
DE-A- 2 038 446
DE-B- 1 780 497
FR-A- 2 068 115
GB-A-    29 655
US-A- 2 902 291
US-A- 3 794 344
US-A- 4 181 323

(73) Patentinhaber : Bergische Achsenfabrik Fr. Kotz & Söhne
Am Ohlerhammer
D-5276 Wiehl 1 (DE)

(72) Erfinder : Steiner, Helmut
Freiherr-vom-Stein-Strasse 1
D-5276 Wiehl (DE)
Erfinder : Lang, Karl Rainer, Ing. grad.
Driescherstrasse 36
D-5223 Nümbrecht (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

EP 0 166 882 B1

### Beschreibung

Gegenstand der Erfindung ist eine höhenverstellbare Luftfederung für Fahrzeuge, mit starren Radachsen, die auf beiden Fahrzeugseiten durch zur Höhenverstellung unterschiedlich stark und unabhängig voneinander aufblasbare vordere und hintere Tragluftfedern gegenüber einem Fahrzeugrahmen abgefedert und durch an rahmenfesten Konsolen angelenkte Längslenker geführt sind, wobei die Anlenkachse jedes Längslenkers an der rahmenfesten Konsole dadurch ebenfalls höhenverstellbar ist, daß der Längslenker an einer in der Konsole schwenkbar gelagerten, im Verhältnis zum Längslenker kurzen Schwinge angelenkt ist.

Aus der DE-A-1 964 365 ist eine Achsaufhängung für Fahrzeuge mit einer höhenverstellbaren Luftfederung bekannt, bei der an beiden Enden der Radachse T-förmige Traversen befestigt sind, die sich über eine vordere und eine hintere Luftfeder am Fahrzeugrahmen abstützen und durch an rahmenfesten Konsolen angelenkte Längslenker geführt sind. Mit dieser höhenverstellbaren Luftfederung ist es schwierig, die Neigung des Fahrzeugrahmens zu verändern. Eine ähnliche Luftfederung ist aus der US-A-4 181 323 bekannt.

Aus der DE-A-2 038 446 ist eine Fahrzeugaufhängung mit einer höhenverstellbaren Luftfederung bekannt, bei der an der in Fahrtrichtung hinten liegenden Achse eine Liftvorrichtung zum Anheben bei Leerfahrt angeordnet ist. Diese Liftvorrichtung besteht aus einer pneumatischen Betätigungsvorrichtung, die zwischen dem vorderen Ende eines als zweiarmiger Hebel ausgebildeten Lenkers für die Radachse und dem Fahrzeugrahmen angeordnet ist. Mit dieser bekannten Liftvorrichtung könnte die Neigung eines Fahrzeugrahmens nur dann geändert werden, wenn alle Achsen mit dieser Liftvorrichtung ausgerüstet wären.

Aus der FR-B-2 068 115 ist eine Vorrichtung zum Ausgleich der Neigung eines Fahrzeugrahmens in Verbindung mit blattgefederten Achsen bekannt. Diese bekannte Vorrichtung besteht aus einem den Achskörper untergreifenden, L-förmig ausgebildeten Hebel, einem Hubzylinder zum Anheben dieses Hebels und einem Schwenkzylinder zum Verschwenken desselben Hebels unter den Achskörper bzw. ein Konstruktionsteil der Federeinbindung. Da sowohl der Hubzylinder als auch der Schwenkzylinder getrennt voneinander am Fahrzeugrahmen angelenkt sind, wird für eine kontrollierte Bewegung das Hebels eine komplizierte hydraulische oder pneumatische Schaltung benötigt.

Aus der US-A-2 902 291 ist schließlich eine höhenverstellbare Luftfederung der eingangs beschriebenen Gattung bekannt, bei der aber eine willkürliche Veränderung der Höhenlage des Fahrzeugrahmens auf einer Fahrzeugseite nicht möglich ist.

Davon ausgehend liegt der Erfindung die Aufgabe zugrunde, eine höhenverstellbare Luftfederung mit einer einfach konstruierten Vorrichtung zum Ausgleich der Neigung eines Fahrzeugrahmens zu schaffen.

Als technische Lösung dieser Aufgabe wird vorgeschlagen, daß die eine der Tragluftfedern jeweils zwischen den Schwingen und dem Fahrzeugrahmen angeordnet ist.

Bei einer praktischen Ausführungsform sollte in jedem zusätzlichen Luftfederbalg ein Anschlag angeordnet sein, der die Höhenlage des Anlenkpunktes für den Längslenker im normalen Fahrbetrieb bestimmt.

Mit einer nach dieser technischen Lehre ausgebildeten, höhenverstellbaren Luftfederung ist es mit sehr einfachen Mitteln möglich, die Neigung des Fahrgestelles eines auf einer schiefen Ebene stehenden Fahrzeuges, beispielsweise eines Sattelanhängers wieder zu beseitigen, d. h. den Fahrzeugaufbau in die waagerechte oder annähernd waagerechte Lage zu bringen. Zu diesem Zweck ist es lediglich erforderlich, die Luftfederbälge über den Schwingen an der hängenden Seite des Fahrgestelles von Hand oder über eine geeignete pneumatische Schaltung aufzupumpen. Der dafür erforderliche Luftdruck ist in dem luftgefederten Fahrzeug bereits vorhanden. Mit einer erfindungsgemäß ausgebildeten Luftfederung ist es aber auch möglich, die Neigung eines Fahrgestelles, insbesondere eines Sattelaufliegers mit mehreren luftgefederten Achsen, in Fahrtrichtung gesehen zu verändern, um das vordere Ende auf das Niveau der Sattelkupplung des Zugfahrzeuges anzuheben. Auch diese Neigungsverstellung kann von Hand oder unter Verwendung einer geeigneten pneumatischen Schaltung erfolgen. Für den normalen Fahrbetrieb werden die Luftfederbälge über den Schwingen wieder entlüftet.

Weitere Einzelheiten und Vorteile ergeben sich aus der nachfolgenden Beschreibung der zugehörigen Zeichnungen, in denen eine erfindungsgemäß ausgebildete Luftfederung und ihre Wirkungsweise schematisch dargestellt worden sind. In den Zeichnungen zeigen :

Fig. 1 eine luftgefederte Achse mit für den normalen Fahrbetrieb entlüftetem Luftfederbalg in Seitenansicht ;

Fig. 2 dieselbe Achse mit aufgepumptem Luftfederbalg in Seitenansicht ;

Fig. 3 ein auf einer schiefen Ebene abgestelltes Fahrzeug in Ansicht von hinten ;

Fig. 4 dasselbe Fahrzeug nach dem Aufpumpen der Luftfederbälge auf der hängenden Seite in Ansicht von hinten ;

Fig. 5 einen Sattelauflieger in Seitenansicht.

Unter einem Fahrzeugrahmen 1 ist eine Achse 2 mit Tragluftfedern 3 abgestützt und mit Längslenkern 4 geführt. Das vordere Ende jedes Längslenkers 4 ist an einer Schwinge 5 angelenkt, die ihrerseits schwenkbar auf einer in einer Konsole 6 befestigten Achse 7 gelagert ist. Zwischen der Schwinge 5 und dem Fahrzeugrahmen 1 ist über dem Anlenkpunkt des Längslenkers 4 ein Luftfederbalg 8 angeordnet. In dem Luftfederbalg 8 befindet sich ein Anschlag 9. Unter dem Anlenkpunkt des Längslenkers 4 ist in der Konsole 6 ein weiterer Anschlag 10 für die Schwinge 5 in ihrer untersten Lage vorgesehen.

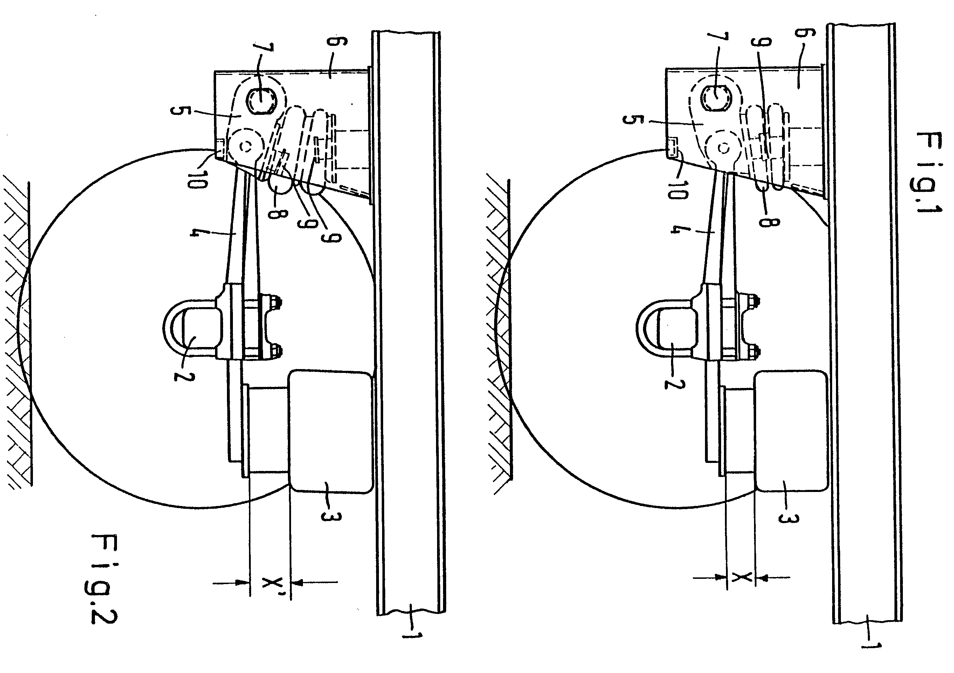

Aus der Gegenüberstellung in den Fig. 1 und 2 ist ersichtlich, daß der Anlenkpunkt des Längslenkers 4 durch Aufpumpen des Luftfederbalges 8 nach unten verschoben werden kann. Gleichzeitig muß natürlich auch die Tragluftfeder 3 vollständig ausgefahren werden, weil sonst nur der halbe Hub des Luftfederbalges 8 ausgenutzt werden könnte.

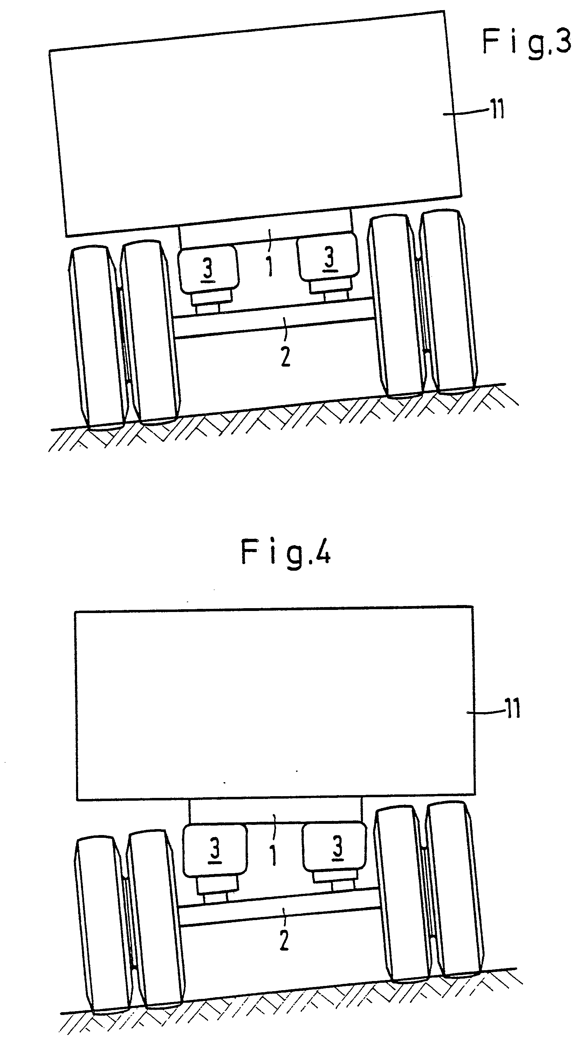

Der praktische Nutzeffekt einer erfindungsgemäß ausgebildeten Vorrichtung ergibt sich aus der Gegenüberstellung in den Fig. 3 und 4. Wenn auf einer Seite eines auf einer Neigung stehenden Fahrzeuges die Tragluftfedern 3 und Luftfederbälge 8 vollständig ausgefahren werden, ist es möglich, einen hängenden Fahrzeugaufbau 11 wieder in die waagerechte Lage zu bringen.

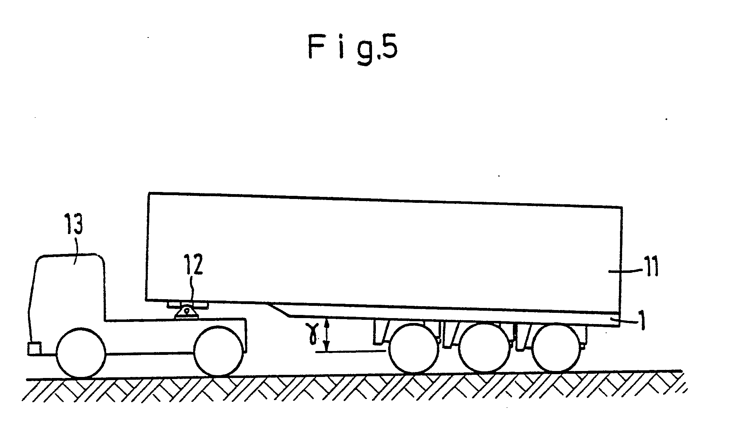

Bei dem in der Fig. 5 dargestellten Sattelauflieger ist es möglich, die in Fahrtrichtung verlaufende Neigung des Fahrzeugaufbaues 11 zu verändern, um das vordere Ende auf das Niveau einer Sattelkupplung 12 eines Zugfahrzeuges 13 anzuheben.

Die beschriebene Vorrichtung ist also dazu geeignet, die Neigung des Fahrzeugrahmens 1 sowohl in Fahrtrichtung als auch quer zur Fahrtrichtung zu verändern.

## Patentansprüche

1. Höhenverstellbare Luftfederung für Fahrzeuge, mit starren Radachsen, die auf beiden Fahrzeugseiten durch zur Höhenverstellung unterschiedlich stark und unabhängig voneinander aufblasbare vordere und hintere Tragluftfedern (3, 8) gegenüber einem Fahrzeugrahmen (1) abgefedert und durch an rahmenfesten Konsolen (6) angelenkte Längslenker (4) geführt sind, wobei die Anlenkachse jedes Längslenkers (4) an der rahmenfesten Konsole (6) dadurch ebenfalls höhenverstellbar ist, daß der Längslenker (4) an einer in der Konsole (6) schwenkbar gelagerten, im Verhältnis zum Längslenker (4) kurzen Schwinge (5) angelenkt ist, dadurch gekennzeichnet, daß die eine (8) der Tragluftfedern jeweils zwischen den Schwingen (5) und dem Fahrzeugrahmen (1) angeordnet ist.

2. Luftfederung nach Anspruch 1, dadurch gekennzeichnet, daß in jedem Luftfederbalg (8) ein Anschlag (9) angeordnet ist.

3. Luftfederung nach den Ansprüchen 1 und 2, dadurch gekennzeichnet, daß in jeder Konsole (6) ein Anschlag (10) für die Schwinge (5) angeordnet ist.

## Claims

1. A vertically adjustable pneumatic suspension for vehicles having rigid wheel axles which are suspended on both sides of the vehicle relatively to a chassis (1) by front and rear pneumatic springs (3, 8) which can be inflated for vertical adjustment differently from one another and independently of one another and which are guided by longitudinal arms (4) articulated to brackets (6) rigidly secured to the chassis, the pivot axis of each arm (4) also being vertically adjustable on the brackets (6) by the arm (4) being articulated to a link (5) which is pivotally mounted in the bracket (6) and which is short relatively to the arm (4), characterised in that one (8) of the pneumatic springs is disposed between each link (5) and the chassis (1).

2. A pneumatic suspension according to claim 1, characterised in that an abutment (9) is disposed in each spring bellows (8).

3. A pneumatic suspension according to claims 1 and 2, characterised in that an abutment (10) for the link (5) is disposed in each bracket (6).

## Revendications

1. Suspension pneumatique réglable en hauteur pour véhicules à essieux rigides, pourvus sur les deux côtés du véhicule, d'une suspension par rapport au châssis du véhicule, qui est constituée par des ressorts à coussin d'air (3, 8) avant et arrière, gonflables à des pressions différentes, de manière indépendante, et guidés par des bras oscillants longitudinaux (4) articulés sur des consoles (6) solidaires du châssis, dont l'axe d'articulation de chaque bras oscillant longitudinal (4) peut être également réglé en hauteur sur la console (6) solidaire du châssis, de telle sorte que le bras oscillant longitudinal (4) est articulé sur une bielle oscillante (5), courte par rapport au bras oscillant longitudinal (4) et susceptible de pivoter sur la console (6), caractérisée en ce que l'un des ressorts à coussin d'air (8) est disposé entre les bielles oscillantes (5) et le châssis du véhicule (1).

2. Suspension pneumatique selon la revendication 1, caractérisée en ce qu'il est disposé une butée (9) sur chaque soufflet pneumatique.

3. Suspension pneumatique selon les revendications 1 et 2, caractérisée en ce qu'il est disposé, sur chaque console (6), une butée (10) pour la bielle oscillante.

Fig.1

Fig.2

0 166 882

Fig.3

Fig.4

# F i g.5